# EUROPEAN PATENT APPLICATION

(11) **EP 3 346 307 A1**
(43) Date of publication of application: **11.07.2018**
(21) Application number: 17020117.2
(22) Date of filing: 28.03.2017
(51) Int. Cl.: G02B 6/44

(54) **LOOSE TUBE FOR OPTICAL FIBER CABLE**

(30) Priority: 06.01.2017 IN 201721000635
(71) Applicant: Sterlite Technologies Ltd, Maharashtra 431 136 (IN)
(72) Inventor: Bezawada, Nagaraju, 431136 Maharashtra (IN); Lanke, Malleswararao, 431136 Maharashtra (IN); Gaikwad, Sandeep, 431136 Maharashtra (IN); Watekar, Pramod, 431136 Maharashtra (IN)
(74) Representative: Norris, Timothy Sweyn

(57) **Abstract**

Disclosed is a loose tube for an optical fiber cable (100). The loose tube includes a tube having a non-circular shape. Each type of the non-circular shape comprises at least one of at least one semicircular side and at least elimination of one corner. In addition, a structure and an arrangement of a plurality of loose tubes (110a-110f) inside the optical fiber cable (100) reduces free space between a core of the optical fiber cable (100) and the plurality of loose tubes (110a-110f). The free space is reduced by 60% to 90% based on existing free space. The optical fiber cable (100) with one or more loose tubes has a packing density in a range of 10 to 35. The loose tube has a first diameter in a range of 1.3 millimeters to 1.6 millimeters and a second diameter in a range of 1.7 millimeters to 2.1 millimeters.

## Description

### TECHNICAL FIELD

The present disclosure relates to the field of fiber optic cable and more specifically, the present disclosure relates to a loose tube for an optical fiber cable.

### BACKGROUND

Optical fiber cables have been widely employed for a number of applications in the recent years. These applications include underground applications, indoor applications, outdoor application and the like. These optical fiber cables are categorized based on their structure. The structure of some of these optical fiber cables is based on a loose tube design. The loose tube design corresponds to various number of loose tubes positioned inside a core of these optical fiber cables. The loose tubes may or may not be stranded around a central strength member. In addition, the loose tubes enclose a plurality of optical fibers loosely held inside the loose tubes and sometimes with fiber ribbon structure. The loose tubes may or may not be filled with a water blocking gel. Further, these optical fiber cables include a protective jacket layer and other additional layers. The additional layers may include a strength layer, water blocking layer, armored layer and the like. Typically, the loose tubes in these optical fiber cables are circular in shape. The circular shape of these loose tubes is attained through various extrusion processes. In addition, the shape of the loose tubes may include an oval shape and pentagonal shape.

Traditionally, the loose tubes are compressed for reducing the diameter of the optical fiber cable. In one of the prior arts with patent number US 8718428 B2, a micromodule subunit optical fiber cable is provided. The micromodule subunit cable includes a subunit cable jacket. The subunit cable jacket encloses two subunits. Each of the two subunits includes a buffer tube which encloses a group of optical fibers. In addition, the buffer tube is a loose tube having a circular cross section. Moreover, the subunits are compressed against an interior of the subunit cable jacket to achieve an oval cross section of the subunits. The compression is done for reducing the diameter of the subunit optical fiber cable. The conventional loose tubes with circular cross section and oval cross section have certain limitations. The circular shape of the loose tubes results in an increase in diameter of the optical fiber cable. Also, the circular shaped loose tubes result in an increase in weight of the optical fiber cables. In addition, the circular shape of the loose tubes results in empty spaces between the core of the optical fiber cable and the loose tubes. The large diameter of the optical fiber cables is undesirable when the optical fiber cables with small diameter are required. The circular shape restricts the diameter to be reduced to a desirable value or range. The prior art does not allow a reduction in weight of the optical fiber cable after compression. In addition, the oval shaped subunits in the prior art do not cover the empty spaces inside the core and the subunits.

In light of the foregoing discussion, there exists a need for a loose tube for optical fiber cables which overcomes the above cited drawbacks of conventionally known circular and oval shaped loose tubes.

### SUMMARY

According to an embodiment, a loose tube for an optical fiber cable comprises a tube having a non-circular shape. Each type of the non-circular shape comprises at least one of at least one semicircular side and at least elimination of one corner. In addition, a structure and an arrangement of a plurality of loose tubes inside the optical fiber cable reduces free space between a core of the optical fiber cable and the plurality of loose tubes. The non-circular shape of the loose tube is not achieved by compression. The free space is reduced by 60% to 90% based on existing free space. The optical fiber cable with one or more loose tubes has a packing density in a range of 10 to 35. The loose tube has a first diameter in a range of 1.3 millimeters to 1.6 millimeters and a second diameter in a range of 1.7 millimeters to 2.1 millimeters.

According to another embodiment, an optical fiber cable comprises a plurality of loose tubes stranded around a central strength member. Each tube of the plurality of loose tubes has a non-circular shape. Each type of the non-circular shape comprises at least one of at least one semicircular side and at least elimination of one corner. In addition, a structure and an arrangement of a plurality of loose tubes inside the optical fiber cable reduces free space between a core of the optical fiber cable and the plurality of loose tubes. The non-circular shape of the plurality of loose tube is not achieved by compression. The free space is reduced by 60% to 90% based on existing free space. The optical fiber cable with one or more loose tubes has a packing density in a range of 10 to 35. The loose tube has a first diameter in a range of 1.3 millimeters to 1.6 millimeters and a second diameter in a range of 1.7 millimeters to 2.1 millimeters.

Embodiments of the present disclosure substantially eliminate or at least partially address the aforementioned problems in the prior art, and provides a loose tube for an optical fiber cable. The non-circular loose tube helps in reduction of the diameter of the optical fiber cable. In addition, the non-circular loose tube helps in reduction of the weight of the optical fiber cable. Moreover, the non-circular loose tube helps in maintenance or increase in the packing density of the optical fiber cable. Further, the structure of the non-circular loose tubes eliminates empty spaces between the core and the loose tubes inside the optical fiber cable.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

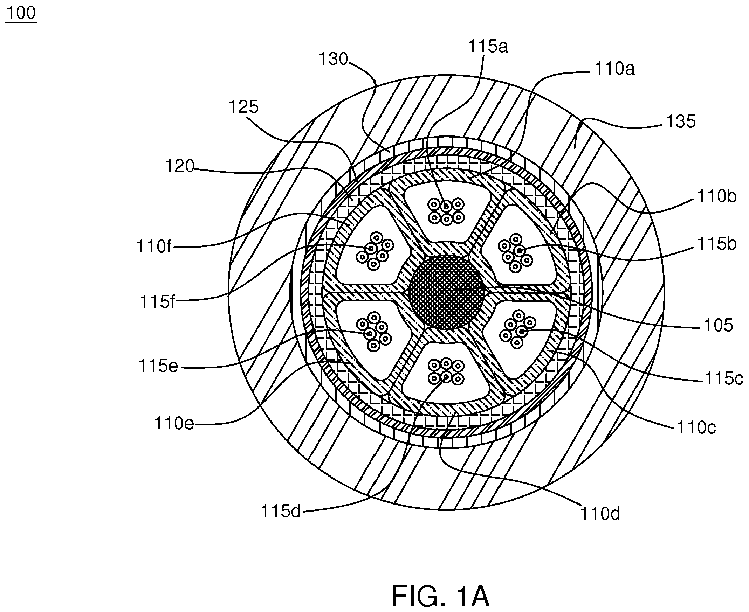

FIG. 1A illustrates a cross sectional view of an optical fiber cable, in accordance with an embodiment of the present disclosure; and

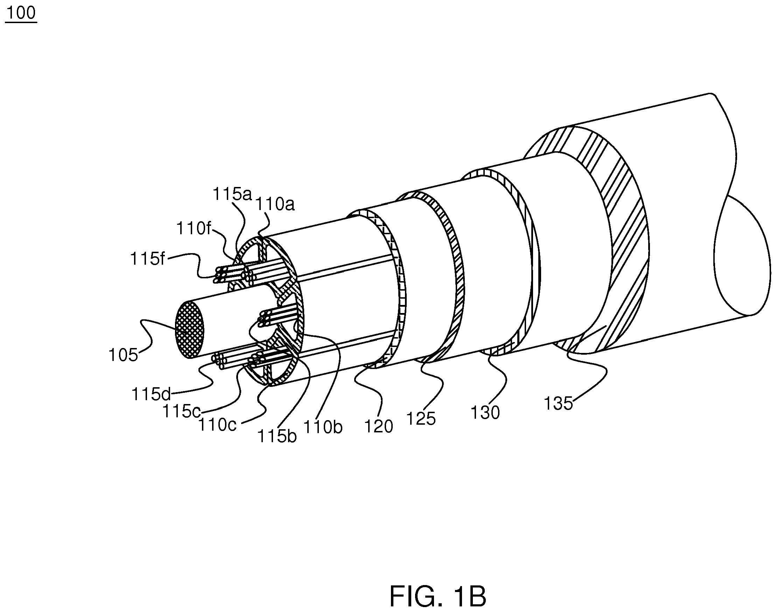

FIG. 1B illustrates a perspective view of the optical fiber cable of FIG. 1A, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

**FIG. 1A** illustrates a cross sectional view of an exemplary optical fiber cable **100** with non-circular loose tubes, in accordance with an embodiment of the present disclosure. In addition, the **FIG. 1A** shows an arrangement of a plurality of loose tubes inside the optical fiber cable **100**. Moreover, the arrangement shows a utilization of the plurality of loose tubes inside the optical fiber cable **100**. The optical fiber cable **100** is a specific type of optical fiber cable with a plurality of layers. In an embodiment of the present disclosure, the non-circular loose tubes can be used inside any type of optical fiber cable with more or less number of layers.

The type of optical fiber cable includes armored cable, loose tube buffered cable, tight buffered cable, hybrid cable, optical fiber ribbon cable and other types of cables known in the art. Each of the optical fiber cable is used for a variety of applications. In an example, the optical fiber cable may be used for installation in micro-ducts. In another example, the optical fiber cable is used for distribution in homes, offices and the like. In yet another example, the optical fiber cable is used for riser and plenum applications. In addition, the optical fiber cable **100** may be used for a specific type of application from the variety of applications. In an example, the optical fiber cable **100** is used for indoor applications and outdoor applications.

The optical fiber cable **100** includes a central strength member **105**, a plurality of loose tubes **110a-110f,** a plurality of optical fibers **115a-115f**, a first layer **120** and a second layer **125** (as seen in **FIG. 1A** in conjunction with the perspective view of the exemplary optical fiber cable **100** provided in **FIG. 1B**). In addition, the optical fiber cable **100** includes a third layer **130** and a fourth layer **135.** In an embodiment of the present disclosure, the plurality of loose tubes **110a-110f** can be placed inside any type of optical fiber cable with any number of layers around the plurality of loose tubes **110a-110f.** The optical fiber cable **100** is used to transmit optical signals (which may carry sensor data or communication data).

In an embodiment of the present disclosure, the central strength member **105** lies substantially along a longitudinal axis of the optical fiber cable **100**. The central strength member **105** may be coated with a layer of polyethylene. The central strength member **105** may be coated with any suitable material. In an example, the material includes but not be limited to high density polyethylene, medium density polyethylene and polypropylene. The central strength member **105** has a circular cross-section. The central strength member **105** is made of a composite material having a polymer matrix. The composite material is flexible fiber reinforced plastic. The central strength member **105** may not be coated.

The fiber reinforced plastic is a composite material having a polymer matrix reinforced with glass fibers. Examples of the fiber reinforced plastics include glass fibers, carbon fibers, aramid fibers, basalt fibers and the like. The central strength member **105** is made of any suitable material. Moreover, the central strength member **105** provides physical strength to the optical fiber cable **100** and resists over bending of the optical fiber cable **100**. The central strength member **105** provides tensile strength to the optical fiber cable **100**. The tensile strength corresponds to a resistance shown by the optical fiber cable **100** against buckling. The central strength member **105** is characterized by a diameter measured along the cross section. In an example, the diameter of the central strength member **105** is 2.2 millimeters. In an embodiment of the present disclosure, the diameter of the central strength member **105** may vary. Also, the central strength member **105** prevents buckling of the optical fiber cable **100**. In another embodiment of the present disclosure, the optical fiber cable **100** may not include the central strength member **105**.

Further, the optical fiber cable **100** includes the plurality of loose tubes **110a-110f.** Each of the plurality of loose tubes **110a-110f** is a non-circular loose tube. In addition, each of the plurality of loose tube **110a-110f** includes a tube. The tube of each of the plurality of loose tubes **110a-110f** has a non-circular shape. In an embodiment of the present disclosure, the non-circular shape of each loose tube of the plurality of loose tube includes at least one of a rectangular shape, a square shape, a trapezoidal shape and hexagonal shape. In an embodiment of the present disclosure, the non-circular shape may include any other type of non-circular shape. In an embodiment of the present disclosure, the non-circular shape does not include a triangular shape. In an embodiment of the present disclosure, the plurality of loose tubes **110a-110f** include the trapezoidal shape (as shown in **FIG. 1A** and **FIG. 1B****).**

In another embodiment of the present disclosure, the plurality of loose tubes **110a-110f** inside the optical fiber cable **100** is a combination of a plurality of non-circular shapes. In an example, the combination of the plurality of non-circular shapes includes the square shape and the trapezoidal shape. In an embodiment of the present disclosure, at least one corner of a loose tube of the plurality of loose tubes **110a-110f** coincides with a corner of another loose tube of the plurality of loose tubes **110a-110f** (as shown in the **FIG. 1A** and the **FIG. 1B**).

Further, each type of the non-circular shape includes at least one of at least one semicircular side and at least elimination of one corner. In an embodiment of the present disclosure, the semicircular side of the plurality of loose tubes **110a-110f** touches the first layer **120** (as shown in the **FIG. 1A** and **FIG. 1B**). In an embodiment of the present disclosure, at least one semicircular side of the plurality of loose tubes **110a-110f** touches the first layer **120**. In addition, at least one corner of the non-circular shape is eliminated to achieve the final shape of the plurality of loose tubes **110a-110f** inside the optical fiber cable **100**. The shape is eliminated for adjusting the plurality of loose tubes **110a-110f** inside the optical fiber cable **100**.

In an embodiment of the present disclosure, the shape is formed to properly arrange the plurality of loose tubes **110a-110f** around the central strength member **105**. In an embodiment of the present disclosure, the non-circular shape does not include oval shape and octagonal shape. The non-circular shape of the plurality of loose tubes **110a-110f** is not achieved by compression. The non-circular shape of the plurality of loose tubes **110a-110f** is achieved during the manufacturing stage (mentioned below in the patent application). In an embodiment of the present disclosure, the plurality of loose tubes **110a-110f** is made of a material selected from a group. The group consists of polyamide, thermoplastic material, low smoke zero halogen, and polycarbonate. In another embodiment of the present disclosure, the plurality of loose tubes **110a-110f** is made of any other suitable material.

Furthermore, an arrangement of the plurality of loose tubes **110a-110f** inside the optical fiber cable **100** reduces free space between a core of the optical fiber cable **100** and the plurality of loose tubes **110a-110f.** The core of the optical fiber cable **100** includes the central strength member **105** and the first layer **120**. In an embodiment of the present disclosure, a structure of the plurality of loose tubes **110a-110f** eliminates the free space between the core of the optical fiber cable **100** and the plurality of loose tubes **110a-110f.** In an embodiment of the present disclosure, the free space is reduced by the non-circular shape of the plurality of loose tubes **110a-110f.** The plurality of loose tubes **110a-110f** covers a large area inside the core of the optical fiber cable **100**. The free space is reduced by 60% to 90% based on existing free space. The free space is reduced due to the shape of the plurality of loose tubes **110a-110f.** In an embodiment of the present disclosure, the free space is reduced by 85% in the optical fiber cable **100**. In an embodiment t of the present disclosure, the reduction in the free space may vary. In addition, the non-circular shape of the plurality of loose tubes **110a-110f** helps in reduction of a diameter of the optical fiber cable **100**.

The non-circular shape of the plurality of loose tubes **110a-110f** ensures a same packing density inside the optical fiber cable **100**. In addition, the use of non-circular plurality of loose tubes **110a-110f** reduces a weight of the optical fiber cable **100**. In an embodiment of the present disclosure, the same packing density and the reduced diameter ensures the reduction in the weight of the optical fiber cable **100**. In an example, the diameter of an optical fiber cable with circular loose tubes will have a larger diameter and greater weight than an optical fiber cable with the non-circular loose tubes. In addition, an effective packing density inside the optical fiber cable **100** is increased. The optical fiber cable **100** with one or more loose tubes has a packing density in a range of 10 to 35. In another embodiment of the present disclosure, the packing density may vary. The packing density corresponds to a fraction of the space filled up by the one or more loose tubes of the optical fiber cable. In an embodiment of the present disclosure, the packing density of the optical fiber cable **100** is in a range of 10 % to 35 % based on number of fibers per tube.

In an embodiment of the present disclosure, the optical fiber cable **100** with the plurality of loose tubes **110a-110f** is compact with smaller diameter and reduced weight. In an embodiment of the present disclosure, the plurality of loose tubes **110a-110f** can be arranged inside any type of optical fiber cable. In addition, the weight of the optical fiber cable **100** is reduced by keeping each parameter associated with the optical fiber cable **100** unaffected. In addition, the plurality of loose tubes **110a-110f** increases strength of the optical fiber cable **100**.

In an embodiment of the present disclosure, the plurality of loose tubes **110a-110f** is stranded around the central strength member **105** to form a stranded core. In an embodiment of the present disclosure, the central strength member **105** is surrounded by the plurality of loose tubes **110a-110f.** In an embodiment of the present disclosure, the plurality of loose tubes **110a-110f** is S-Z stranded around the central strength member **105**. Each of the plurality of loose tubes **110a-110f** is wound around the central strength member **105** in sections with a first direction of winding in an S-shape alternating with the sections with a second direction of winding in a Z-shape. In an embodiment of the present disclosure, the first direction is a clockwise direction and the second direction is an anticlockwise direction. The binding is performed to retain lay length of the stranded plurality of loose tubes **110a-110f** and uniform stress distribution along length of the optical fiber cable **100**. The S-Z fashion of stranding is a form of stranding of the plurality of loose tubes **110a-110f.** In addition, the S-Z stranding allows uniform distribution of the stress across all the plurality of loose tubes **110a-110f.** The S-Z stranding may have any number of turns between the S-shape and the Z-shape.

The SZ stranding of the one or more buffer tubes **110a-110l** is performed in order to maintain a uniform lay length, mid-spanning and achieve higher production speeds as compared to Helical stranding. In general, the lay length is a longitudinal distance along length of the central strength member **105** required for one loose tube to go all the way around the central strength member **105**. In another embodiment of the present disclosure, the plurality of loose tubes **110a-110f** may not be stranded around the central strength member **105**.

Each of the plurality of loose tubes **110a-110f** has a thickness. In an embodiment of the present disclosure, the thickness of each of the plurality of loose tubes **110a-110f** is equal. In an embodiment of the present disclosure, an average thickness of the plurality of loose tubes **110a-110f** is constant. In an embodiment of the present disclosure, the thickness of each loose tube of the plurality of loose tubes **110a-110f** may vary for different types of optical fiber cable. In an example, the thickness of each of the plurality of loose tubes **110a-110f** is about 0.60 millimeter. In an embodiment of the present disclosure, the thickness of each of the plurality of loose tubes **110a-110f** is in a range of about 0.20 millimeter - 0.25 millimeter.

Each of the plurality of loose tubes **110a-110f** is characterized by a first diameter and a second diameter. The first diameter of the plurality of loose tubes **110a-110f** is an inner diameter of the plurality of loose tubes **110a-110f.** The second diameter of the plurality of loose tubes **110a-110f** is an outer diameter of the plurality of loose tubes **110a-110f.** Each of the plurality of loose tubes **110a-110f** has the first diameter in a range of 1.3 millimeters to 1.6 millimeters. In an embodiment of the present disclosure, the first diameter of the plurality of loose tubes **110a-110f** may vary. Each of the plurality of loose tubes **110a-110f** has the second diameter in a range of 1.7 millimeters to 2.1 millimeters. In an embodiment of the present disclosure, the second diameter of the plurality of loose tubes **110a-110f** may vary.

Going further, the plurality of loose tubes **110a-110f** encloses the plurality of optical fibers **115a-115f**. In an embodiment of the present disclosure, the plurality of optical fibers **115a-115f** are positioned at a center of each of the plurality of loose tubes **110a-110f.** In an example, each of the plurality of loose tubes **110a-110f** encloses 6 optical fibers (as shown in **FIG. 1A** and **FIG. 1B**). In an example, each of the plurality of loose tubes **110a-110f** encloses 8 optical fibers. In an embodiment of the present disclosure, each of the plurality of loose tubes **110a-110f** may enclose any number of optical fibers. In an embodiment of the present disclosure, each of the plurality of loose tubes **110a-110f** may enclose different number of optical fibers. Each of the plurality of loose tubes **110a-110f** is a tube for encapsulating the plurality of optical fibers **115a-115f**. The plurality of loose tubes **110a-110f** provides support and protection to each of the plurality of optical fibers **115a-115f** against crush, bend and stretch. In addition, the plurality of loose tubes **110a-110f** protects the plurality of optical fibers **115a-115f** and prevents ingression of water inside the stranded core of the optical fiber cable **100**.

Further, the plurality of loose tubes **110a-110f** provides mechanical isolation, physical damage protection and identification of each of the plurality of optical fibers **115a-115f**. In an embodiment of the present disclosure, each of the plurality of loose tubes **110a-110f** may be colored. In an embodiment of the present disclosure, each of the plurality of loose tubes **110a-110f** has a different color. In addition, total number of colors available for coloring the loose tubes is 12. In an embodiment of the present disclosure, the coloring is done for identification of each of the plurality of loose tubes **110a-110f.** The colors include blue, orange, green, brown, gray, white, red, black, yellow, violet, pink and aqua. In another embodiment of the present disclosure, the plurality of loose tubes **110a-110f** may not be colored.

In an embodiment of the present disclosure, each of the plurality of loose tubes **110a-110f** is filled with a gel. In an embodiment of the present disclosure, the gel is a thixotropic gel. In an embodiment of the present disclosure, the thixotropic gel prevents ingression of water inside each of the plurality of loose tubes **110a-110f.** In another embodiment of the present disclosure, the gel may include any other type of gel. In another embodiment of the present disclosure, the plurality of loose tubes **110a-110f** may not be filled with the gel.

Further, each of the plurality of optical fibers **115a-115f** is a fiber used for transmitting information as light pulses from one end to another. In addition, each of the plurality of optical fibers **115a-115f** is a thin strand of glass capable of transmitting optical signals. Also, each of the plurality of optical fibers **115a-115f** is configured to transmit large amounts of information over long distances with relatively low attenuation. Further, each of the plurality of optical fibers **115a-115f** includes a core region and a cladding region. The core region is an inner part of an optical fiber and the cladding section is an outer part of the optical fiber. Moreover, the core region is defined by a central longitudinal axis of each of the plurality of optical fibers **115a-115f**. In addition, the cladding region surrounds the core region.

Each of the plurality of optical fibers **115a-115f** is characterized by a diameter. In an example, each of the plurality of optical fibers **115a-115f** has a diameter of about 200 microns. In another example, each of the plurality of optical fibers **115a-115f** has a diameter of about 250 microns. In yet another example, each of the plurality of optical fibers **115a-115f** has a diameter in a range of 200 microns ± 10 microns. In yet another example, each of the plurality of optical fibers **115a-115f** has a diameter in a range of 250 microns ± 10 micron. In an embodiment of the present disclosure, the diameter of each of the plurality of optical fibers **115a-115f** may vary as per each type of the optical fiber cable. In an embodiment of the present disclosure, each of the plurality of optical fibers **115a-115f** is a standard ITU-T G.652D silica optical fiber. In an embodiment of the present disclosure, each of the plurality of optical fibers **115a-115f** is a single mode fiber. In another embodiment of the present disclosure, each of the plurality of optical fibers **115a-115f** is a multimode fiber.

In an embodiment of the present disclosure, the number of the plurality of optical fibers **115a-115f** in each loose tube may vary depending upon the cable requirements. In an example, a total number of the plurality of optical fibers **115a-115f** in the optical fiber cable **100** is 36 (6*6). In another example, a total number of the plurality of optical fibers **115a-115f** in the optical fiber cable **100** is 48 (8*6). In an embodiment of the present disclosure, the total number of the plurality of optical fibers **115a-115f** may be any amount depending upon the number of loose tubes and the optical fibers in each loose tube.

In an embodiment of the present disclosure, each of the plurality of optical fibers **115a-115f** is a colored optical fiber. In an embodiment of the present disclosure, each of the plurality of optical fibers **115a-115f** has a different color. In another embodiment of the present disclosure, the total number of colors available for coloring the optical fibers is 12. The coloring is done for identification of each of the plurality of optical fibers **115**. The colors include blue, orange, green, brown, gray, white, red, black, yellow, violet, pink and aqua. In an embodiment of the present disclosure, the color repeats with ring marking on fibers when the numbers of the plurality of optical fibers **115** exceed more than 12. In another embodiment of the present disclosure, each of the plurality of optical fibers **115a-115f** is not colored.

Going further, the non-circular shape of the plurality of loose tubes **110a-110f** is achieved during a manufacturing method of the plurality of loose tubes **110a-110f.** The plurality of loose tubes **110a-110f** is made shape by extrusion method. The extrusion method utilizes an extrusion cross head for forming a tube around one or more optical fibers. The extrusion process starts with application of gel or grease around one or more optical fibers. Accordingly, the optical fibers are pulled through the extruder cross head. The extruder cross head forms the tube around the optical fiber cables. The loose tube material is added in the extrusion cross head at high temperature.

The non-circular shape of the tube is achieved through a die inside the extruder cross head. In an embodiment of the present disclosure, the shape of the die is non-circular in order to achieve the non-circular shape of the loose tube. Further, the non-circular loose tube is submerged in a water filled trough for cooling and solidifying the loose tube. Accordingly, the loose tube with the non-circular shape after the cooling and solidification is achieved.

In an embodiment of the present disclosure, the optical fiber cable **100** includes the first layer **120**. The first layer **120** surrounds the plurality of loose tubes **110a-110f.** In an embodiment of the present disclosure, the first layer **120** includes one or more yarns. In addition, the first layer acts as a binding element for the plurality of loose tubes **110a-110f.** In an embodiment of the present disclosure, each of the one or more yarns is a binder yarn. In an embodiment of the present disclosure, the binder yarn is made of polyester. In another embodiment of the present disclosure, the binder yarn is made of aramid. In yet another embodiment of the present disclosure, the binder yarn is made of polypropylene. In an embodiment of the present disclosure, each of the one or more yarns is a yarn thread.

In an embodiment of the present disclosure, the binder yarn facilitates absorption of water and moisture. In addition, each of the one or more yarns prevents ingression of the water inside the optical fiber cable **100**. In an embodiment of the present disclosure, the optical fiber cable **100** may have any number of yarn threads. In addition, the first layer **120** binds the plurality of loose tubes **110a-110f** to prevent opening up of the S-Z stranded plurality of loose tubes **110a-110f.** In an embodiment of the present disclosure, the first layer **120** provides retention of the lay length of the plurality of loose tubes **110a-110f.** In an embodiment of the present disclosure, the first layer **120** acts as a strengthening element for the plurality of loose tubes **110a-110f.** In another embodiment of the present disclosure, the first layer **120** may be any type of layer. In an embodiment of the present disclosure, the first layer **120** may have any thickness.

In an embodiment of the present disclosure, the optical fiber cable **100** includes the second layer **125**. The second layer **125** surrounds the first layer **120**. In an example, the second layer **125** is a water blocking layer. In another example, the second layer **125** is a layer of water swellable yarns. In an embodiment of the present disclosure, the second layer **125** prevents the ingression of water inside the optical fiber cable **100**. In another embodiment of the present disclosure, the second layer **125** may be any type of layer. In an embodiment of the present disclosure, the second layer **125** may have any thickness as per requirement. In an embodiment of the present disclosure, the optical fiber cable **100** includes the third layer **130**. The third layer **130** surrounds the second layer **125**. In an example, the third layer **130** is an armoring layer. In an example, the third layer **130** is a steel strip armoring layer. In an embodiment of the present disclosure, the third layer **130** may be any type of layer. In an embodiment of the present disclosure, the third layer **130** may have any thickness as per requirement.

In an embodiment of the present disclosure, the optical fiber cable **100** includes the fourth layer **135**. The fourth layer **135** surrounds the third layer **130**. In an embodiment of the present disclosure, the fourth layer **135** is made of polyethylene. In another embodiment of the present disclosure, the fourth layer **135** is made of any suitable material. In an example, the material includes medium density polyethylene, high density polyethylene, polypropylene, nylon and the like. The fourth layer **135** is characterized by a thickness. In an embodiment of the present disclosure, the fourth layer **135** may have any thickness as per the cable requirements. In an example, the fourth layer **135** has a thickness of about 0.45 millimeter. In another example, the fourth layer **135** has the thickness in the range of 0.45 millimeter ± 0.05 millimeter. In an embodiment of the present disclosure, the fourth layer **135** is black in color. In another embodiment of the present disclosure, the fourth layer **135** may be of any color. The fourth layer **135** layer interacts directly with ambient environment. In addition, the fourth layer **135** is a sheathing layer. The fourth layer **135** protects the optical fiber cable **100** against the crush, the bend and tensile stress along the length of the optical fiber cable **100**.

The optical fiber cable **100** is characterized by a diameter. In an example, the optical fiber cable **100** has an outer diameter of about 10.7 millimeters. In another example, the optical fiber cable **100** has the outer diameter in a range of 10.7 millimeters ± 0.3 millimeter. In an example, the optical fiber cable **100** has a core diameter of about 5.8 millimeters. In an example, an inner area of each of the plurality of loose tubes **110a-110f** is 1.77 mm². In an example, the packing density inside the optical fiber cable **100** is 23 %. In an embodiment of the present disclosure, an overall reduction in the diameter of the optical fiber cable **100** is 5.1%. In another embodiment of the present disclosure, an overall reduction in the diameter of the optical fiber cable **100** is more or less than 5.1%. In an example, the weight of the optical fiber cable **100** is 94 Kg/km. In an embodiment of the present disclosure, an overall reduction in the weight of the optical fiber cable **100** is 2.8%. In an embodiment of the present disclosure, an overall reduction in the weight of the optical fiber cable **100** is more or less than 2.8%.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A loose tube for an optical fiber cable (100), the loose tube comprising:
a tube having a non-circular shape,
**characterized in that**
each type of the non-circular shape comprises at least one of at least one semicircular side and at least elimination of one corner, a structure, an arrangement of a plurality of loose tubes (110a-110f) inside the optical fiber cable (100) reduces free space between a core of the optical fiber cable (100) and the plurality of loose tubes (110a-110f), the non-circular shape of the loose tube is not achieved by compression, wherein the free space is reduced by 60% to 90% based on existing free space, wherein the optical fiber cable (100) with one or more loose tubes has a packing density in a range of 10 to 35 and wherein the loose tube has a first diameter in a range of 1.3 millimeters to 1.6 millimeters and a second diameter in a range of 1.7 millimeters to 2.1 millimeters.

2. The loose tube according to claim 1, wherein the non-circular shape of the loose tube comprises at least one of a rectangular shape, a square shape, a trapezoidal shape and hexagonal shape.

3. The loose tube according to claim 1, wherein the plurality of loose tubes (110a-110f) inside the optical fiber cable (100) is a combination of a plurality of non-circular shapes.

4. The loose tube according to claim 1, wherein the loose tube is made of a material selected from a group consisting of polyamide, thermoplastic material, low smoke zero halogen, and polycarbonate.

5. The loose tube according to claim 1, wherein the optical fiber cable (100) with the loose tube is compact with a smaller diameter and reduced weight.

6. An optical fiber cable (100) comprising;
a plurality of loose tubes (110a-110f) stranded around a central strength member (105), wherein each tube of the plurality of loose tubes (110a-110f) has a non-circular shape,
**characterized in that**
each type of the non-circular shape comprises at least one of at least one semicircular side and at least elimination of one corner, a structure and an arrangement of the plurality of loose tubes (110a-110f) inside the optical fiber cable (100) reduces free space between a core of the optical fiber cable (100) and the plurality of loose tubes (110a-110f) and the non-circular shape of the loose tube is not achieved by compression, wherein the free space is reduced by 60% to 90% based on existing free space, wherein the optical fiber cable (100) with one or more loose tubes has a packing density in a range of 10 to 35 and wherein the loose tube has a first diameter in a range of 1.3 millimeters to 1.6 millimeters and a second diameter in a range of 1.7 millimeters to 2.1 millimeters.

7. The optical fiber cable (100) according to claim 6, wherein the non-circular shape of the plurality of loose tubes (110a-110f) comprises at least one of a rectangular shape, a square shape, a trapezoidal shape and hexagonal shape.

8. The optical fiber cable (100) according to claim 6, wherein the plurality of loose tubes (110a-110f) inside the optical fiber cable (100) is a combination of a plurality of non-circular shapes.

9. The optical fiber cable (100) according to claim 6, wherein each of the plurality of loose tubes (110a-110f) is made of a material selected from a group consisting of polyamide, thermoplastic material, low smoke zero halogen, and polycarbonate.

10. The loose tube (100) according to claim 6, wherein the optical fiber cable (100) with the plurality of loose tubes (110a-110f) is compact with a smaller diameter and reduced weight.

11. The optical fiber cable (100) according to claim 6, wherein the optical fiber cable (100) further comprises the central strength member (105) lying substantially along a longitudinal axis of the optical fiber cable (100).

12. The optical fiber cable (100) according to claim 6, wherein the optical fiber cable (100) does not include the central strength member (105).

13. The optical fiber cable (100) according to claim 6, wherein each of the plurality of loose tubes (110a-110f) encloses a plurality of optical fibers (115a-115f).

14. The optical fiber cable (100) according to claim 6, wherein the optical fiber cable (100) further comprises a first layer (120), wherein the first layer (120) comprises one or more yarns and wherein the first layer (120) acts as a binding elements for each of the plurality of loose tubes (110a-110f).

15. The optical fiber cable (100) according to claim 6, wherein the optical fiber cable (100) further comprises a second layer (125) and wherein the second layer (125) surrounds the first layer (120).

16. The optical fiber cable (100) according to claim 6, wherein the optical fiber cable (100) further comprises a third layer (130) and wherein the third layer (130) surrounds the second layer (125).

17. The optical fiber cable (100) according to claim 6, wherein the optical fiber cable (100) further comprises a fourth layer (135) and wherein the fourth layer (135) surrounds the third layer (130).
